**Europäisches Patentamt**

**European Patent Office**

**Office européen des brevets**

(19)

(11) Veröffentlichungsnummer: **0 200 870 B1**

# EUROPÄISCHE PATENTSCHRIFT

(45) Veröffentlichungstag der Patentschrift: **29.05.91**

(51) Int. Cl.⁵: **B62D 33/06**

(21) Anmeldenummer: **86102806.6**

(22) Anmeldetag: **04.03.86**

(54) Hydraulische Kippvorrichtung zum Kippen der Fahrerhäuser von Lastkraftwagen.

(30) Priorität: **03.05.85 DE 3515956**

(43) Veröffentlichungstag der Anmeldung:
**12.11.86 Patentblatt 86/46**

(45) Bekanntmachung des Hinweises auf die
Patenterteilung:
**29.05.91 Patentblatt 91/22**

(84) Benannte Vertragsstaaten:
**DE IT NL**

(56) Entgegenhaltungen:
**EP-A- 0 109 462**
**DE-A- 3 043 590**
**DE-A- 3 249 408**

(73) Patentinhaber: **WEBER-HYDRAULIK GmbH**
**Heilbronner Strasse 30, Postfach 10**
**W-7129 Güglingen(DE)**

(72) Erfinder: **Obermeyer, Günter**
**Lortzingstrasse 2**
**W-7129 Güglingen(DE)**

(74) Vertreter: **Säger, Manfred, Dipl.-Ing.**
**Säger & Partner Patentanwälte Postfach 81**
**08 09**
**W-8000 München(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine hydraulische Kippvorrichtung gemäß dem Oberbegriff des Hauptanspruchs.

Es sind Vorrichtungen mit doppelt wirkenden Hubzylindern zum Zurückkippen und Kippen des Fahrerhauses von Lastkraftwagen bekannt (DE-A-23 56 249), bei denen in der unteren Totpunktlage, d.h. bei wieder zurückgekipptem Fahrerhaus, eine Verbindungsleitung zwischen dem oberen und unteren Zylinderraum wirksam wird, die durch den Kolben getrennt sind. Dementsprechend kann das Fahrerhaus mit seiner federnden Aufhängung am Fahrgestell des Lastkraftwagens frei schwingen.

Aufgrund der Verbindungsleitung zwischen dem oberen und dem unteren Zylinderraum muß aber bei der vorstehend genannten bekannten Vorrichtung zum Kippen des Fahrerhauses die sogenannte Differentialschaltung eingesetzt werden, bei welcher der obere und der untere Zylinderraum mit demselben Druck beaufschlagt wird. Aufgrund der verschiedenen Querschnittsflächen beiderseits des Kolbens - auf der einen Seite ist diese wirksame Querschnittsfläche durch die an dem Kolben festgelegte Kolbenstange vermindert - ergibt sich bei Anlage desselben Drucks in beiden Zylinderräumen eine resultierende Kraft, mittels der der Kolben trotz der Verbindungsleitung in seine ausgefahrene Stellung bewegt werden kann. Damit der Kolben jedoch gegen das gesamte Gewicht des Fahrerhauses mit einer ausreichend großen Kraft wirken kann, muß die Querschnittsfläche der Kolbenstange entsprechend groß sein, da letztlich diese die wirksame resultierende Kraft bestimmt.

Es ist ferner zur Vermeidung der bei Einsatz der Differentialschaltung auftretenden Nachteile bekannt (DE-A-29 45 585), in die Verbindungsleitung ein steuerbares Ventil einzusetzen, welches hydraulisch so gesteuert wird, daß beim Beaufschlagen des einen Zylinderraums zum Kippen des Fahrerhauses mit Druck die Umlaufverbindung zumindest solange durch das steuerbare Ventil unterbrochen wird, bis der Kolben jenen Bereich verlassen hat, in welchem die Verbindungsleitung wirksam ist.

Schließlich ist eine gattungsgemäße hydraulische Kippvorrichtung gemäß dem Oberbegriff des Hauptanspruchs bekannt (EP-A- 0109462), bei der ebenfalls in der Verbindungsleitung ein steuerbares Absperrventil angeordnet ist, welches bei angezogenem Parkbremshebel pneumatisch über ein Vierwege-Zweipositions-Ventil die Verbindungsleitung sperrt. In dieser Lage kann das Fahrerhaus in seine Montagestellung gekippt werden.

Wird also ein Lastkraftwagen mit angezogenem Parkbremshebel, d.h. mit eingefallener Parkbremse abgestellt, so kann, da die Pumpe im allgemeinen von außen zugänglich und mechanisch betätigbar ist, das Fahrerhaus in die Montagestellung gekippt werden, so daß der Motor und sämtliche Aggregate frei zugänglich sind und gestohlen werden können. Andererseits ist es unzweckmäßig, die Pumpe unter dem kippbaren Fahrerhaus anzubringen, weil hydraulische Leitungen extra zur Pumpe und von dort zu dem hydraulischen Zylinder, in jedem Falle aber im Umweg gelegt werden müssen.

Der Erfindung liegt die Aufgabe zugrunde, eine hydraulische Kippvorrichtung gemäß dem Oberbegriff des Hauptanspruchs so auszubilden, daß das Fahrerhaus in der Fahrstellung frei schwingen und bei betätigter Parkbremseinrichtung gegen Diebstahl gesichert ist.

Diese Aufgabe wird bei einer Kippvorrichtung gemäß dem Oberbegriff des Hauptanspruchs erfindungsgemäß durch dessen kennzeichnende Merkmale gelöst.

Aufgrund der Verwendung eines Elektromagneten ist bei dem Absperrventil, welches im stromlosen Zustand des Elektromagneten aufgrund der Kraft einer Feder stets auf Durchgang geschaltet und im stromdurchflossenen Zustand gesperrt ist, sichergestellt, daß selbst bei Abschrauben des Elektromagneten vom Hubzylinder das Absperrventil nicht auf Sperrung geschaltet werden kann. Ist es durchgeschaltet, so kann sich in dem pumpenseitigen Zylinderraum nämlich kein Druck aufbauen. Die Hydraulikflüssigkeit wird vielmehr über die Verbindungsleitung zum anderen Zylinderraum und von dort wieder zu dem Druckmittelbehälter zurücktransportiert. Das Kippen kann nur bei eingefallener Parkbremse sowie zumindest bei Betätigung eines weiteren Schaltorgans, z.B. Leerlaufstellung des Gangschalthebels, und eingeschalteter Zündung erfolgen.

Infolge der Ausbildung des Absperrventils als Elektromagnetventil kann dieses direkt am Hubzylinder angebracht werden, wodurch dieser einfacher aufzubauen ist und damit auch störunanfälliger wird. Zugleich werden die erwünscht geringen Reibbeiwerte während des Schwinghubes in der Fahrstellung des Fahrerhauses beibehalten.

Es ist zwar ein mechanisch betätigbares, zwischen die Zu- und Rückleitung zu dem Hubzylinder verbindendes, mechanisch betätigbares Absperrventil als Diebstahlsicherung bekannt (DE-A-33 04 622), wobei aber eine Verbindungsleitung im Sinne der gattungsgemäßen Vorrichtung nicht vorhanden ist und als besonderen Nachteil Anschlußrohrleitungen zu der Rück- und Zuleitung des Hubzylinders vorgesehen werden, was diese bekannte Vorrichtung beträchtlich verteuert, ohne daß zugleich der einen Federungskomfort in der Fahrstellung zulassender Schwinghub vorgesehen ist.

Zweckmäßige Ausgestaltungen und Weiterbildungen der Erfindung sind in den Unteransprüchen gekennzeichnet.

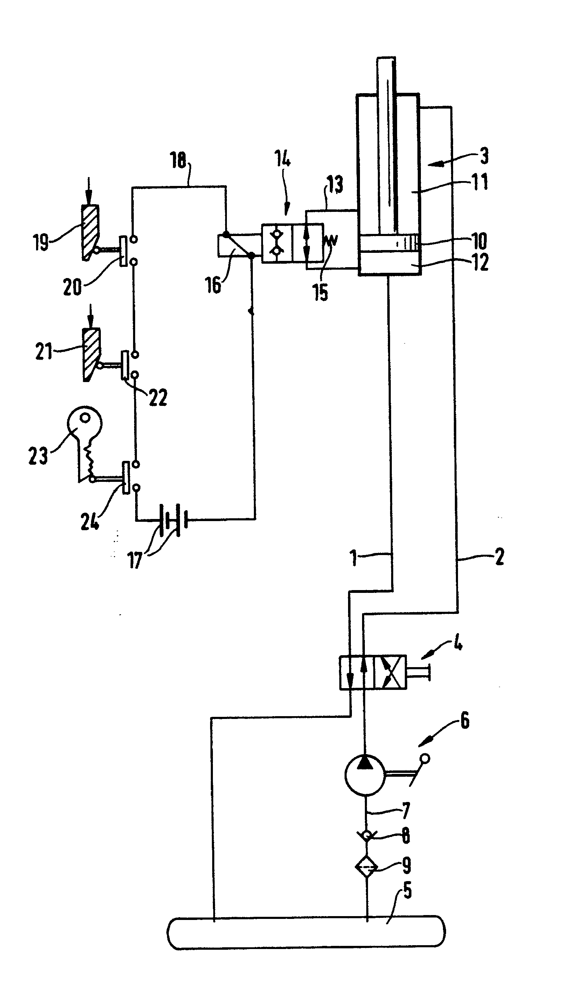

Ein bevorzugtes Ausführungsbeispiel wird nachfolgend unter Bezugnahme auf die Zeichnung näher erläutert, die ein schematisches Schaltbild der hydraulischen Kippvorrichtung zeigt.

Die Zuleitung 1 führt zu dem insgesamt mit 3 bezeichneten, doppelt wirkenden Hubzylinder. Von dort kehrt sie als Rückleitung 2 über ein insgesamt mit 4 bezeichnetes Vierwege-Zweipositions-Ventil einerseitszu dem Druckmittelbehälter 5 und andererseits zu der Pumpe 6 zurück. Die Ansaugleitung 7 zwischen der Pumpe 6 und dem Druckmittelbehälter 5 weist ferner noch ein zu der Pumpe hin öffnendes Rückschlagventil 8 sowie ein Sieb 9 auf.

Der Kolben 10 des Hubzylinders 3 weist in seinem Bereich für den Schwinghub - in der Fahrstellung - eine den durch den Kolben 10 von dem - kolbenstangenseitigen - oberen Zylinderraum 11 getrennten unteren Zylinderraum 12 verbindende Verbindungsleitung 13 auf. In diese Verbindungsleitung ist das insgesamt mit 14 bezeichnete steuerbare und als Elektromagnetventil ausgebildete Absperrventil als Zweiwege-Zweipositions-Ventil angeordnet, welches mittels der Kraft einer Feder 15 in die Durchgangsstellung, wie gezeichnet, geschaltet ist.

Wird der mit 16 schematisch bezeichnete Elektromagnet des Elektromagnetventils 14 von Strom einer Spannungsquelle 17, vorzugsweise der Batterie des Lastkraftwagens, durchflossen, so wird das Elektromagnetventil 14 entgegen der Kraft der Feder 15 von der dargestellten Lage in die Sperrlage geschaltet, in der einzig der Kolben 10 außerhalb des Schwinghubbereiches der Verbindungsleitung 13 bei Druckbeaufschlagung bewegt werden kann, wenn das Vierwege-Zweipositions-Ventil 4 in die nicht gezeigte Lage umgeschaltet ist.

Im Stromkreis 18 der Spannungsquelle 17 und des Elektromagneten 16 sind in Serie vorzugsweise die drei gezeigten Schaltorgane angeordnet. Das Schaltorgan 19 schließt den elektrischen Schalter 20 bei eingefallener Parkbremseinrichtung, beispielsweise bei angezogenem Parkbremshebel. Das Schaltorgan 21 betätigt den Schalter 22 dann, wenn der Gangschalthebel sich in Leerlaufstellung befindet. Das Schaltorgan 23, welches von dem Zündschloß bzw. -Schlüssel betätigt wird, schaltet seinerseits den elektrischen Schalter 24. Erst wenn alle drei Schaltorgane betätigt sind, kann also das elektrische Absperrventil 14 in die nicht gezeigte Lage bewegt werden. Schon das Ausschalten der Zündung aber läßt die Diebstahlsicherung dadurch wirksam werden, daß das Elektromagnetventil 14 infolge der Kraft der Feder 15 in die gezeigte - Durchgangsstellung - bewegt wird.

## Ansprüche

1. Hydraulische Kippvorrichtung zum Kippen der Fahrerhäuser von mit einer Parkbremse versehenen Lastkraftwagen in eine gekippte Montagestellung und von dieser in eine zurückgekippte Fahrstellung des Fahrerhauses mit einer Pumpe (6), mit einem Druckmittelbehälter (5) für die Hydraulikflüssigkeit und mit einem doppelt wirkenden Hubzylinder (3), dessen Kolben (10) und Zylinder jeweils mit dem Fahrerhaus bzw. dem Fahrgestell verbunden sind, mit Druckmittelleitungen (1,2) zum Beaufschlagen mit Druck, die in jeden, durch den Kolben getrennten oberen und unteren Zylinderraum (11,12) münden und wahlweise an die Pumpe oder den Druckmittelbehälter anschließbar sind, wobei die beiden Zylinderräume in in der zurückgekippten Stellung des Fahrerhauses entsprechenden Totpunktlage des Kolbens über eine Verbindungsleitung (13) miteinander verbunden sind und in der Verbindungsleitung an dem Hubzylinder ein in Abhängigkeit von der Parkbremse steuerbares Absperrventil (14) angeordnet ist,
dadurch gekennzeichnet,
daß das Absperrventil (14) als von einem Elektromagneten (16) betätig- und/oder sperrbar ausgebildet ist, welches im stromlosen Zustand aufgrund der Kraft einer Feder (15) stets auf Durchgang und im stromdurchflossenen Zustand auf Sperrung geschaltet ist, und daß in dem Stromkreis (18) des Elektromagneten (16) zumindest zwei elektrische Schalter (20, 22, 24) in Serienschaltung angeordnet sind, von denen der eine (20) bei eingefallener Parkbremse und der andere (22) bei Betätigen zumindest eines gesonderten Schaltorgans (21, 23) geschlossen wird.

2. Vorrichtung nach Anspruch 1,
dadurch gekennzeichnet,
daß das Absperrventil als Elektromagnetventil ausgebildet ist.

3. Vorrichtung nach Anspruch 1,
dadurch gekennzeichnet,
daß das gesonderte Schaltorgan (21) der Gangschalthebel ist, der nur bei Leerlaufstellung den elektrischen Schalter (22) schließt.

4. Vorrichtung nach Anspruch 1 oder 3,
dadurch gekennzeichnet,
daß das gesonderte Schaltorgan (23) der Zündschlüssel bzw. das Zündschloß ist, welches den elektrischen Schalter (24) bei eingeschalteter Zündung schließt.

5. Vorrichtung nach einem der Ansprüche 1 bis 4,
   **dadurch gekennzeichnet,**
   daß das Absperrventil (14) und der Elektromagnet (16) direkt an dem Hubzylinder (3) angeordnet sind.

## Claims

1. Hydraulic tipping device for tipping the driver's cabs of lorries provided with a parking brake into a tipped fitting position and, from this, into a tipped-back driving position of the driver's cab with a pump (6), with a pressure medium container (5) for the hydraulic fluid and with a double-acting lifting cylinder (3), the piston (10) and cylinder of which are connected in each case to the driver's cab or the chassis, with pressure medium pipes (1,2) for pressure actuation which lead into each of the upper and lower cylinder chambers (11,12) separated by the piston, and which can be selectively connected to the pump or the pressure medium container, the two cylinder chambers being connected to each other via a connecting pipe (13) in the dead-centre position of the piston corresponding to the tipped-back position of the cab and there is arranged in the connecting pipe to the lifting cylinder a stop valve (14) which is controllable in dependence upon the parking brake,
   **characterised in that**
   the stop valve (14) is constructed to be operable and/or closable by an electromagnet (16), and in the currentless condition as a result of a spring (15) is switched continuously to the open position and with current flowing to the closed position, and that in the current circuit (18) of the electromagnet (16) there are arranged at least two electrical switches (20,22,24) in series connection, of which the first (20) is closed upon failure of the parking brake and the other (22) is closed upon actuation of at least one separate switching element (21,23).

2. Device according to claim 1,
   **characterised in that**
   the stop valve is constructed as an electromagnetic valve.

3. Device according to claim 1
   **characterised in that**
   the separate switching element (21) is the gear lever, which closes the electrical switch (22) only in the idling position.

4. Device according to claim 1 or 3,
   **characterised in that**
   the separate switching element (23) is the ignition key or the ignition lock, which closes the electrical switch (24) when the ignition is switched on.

5. Device according to any one of claims 1 to 4,
   **characterised in that**
   the stop valve (14) and the electromagnet (16) are arranged directly on the lifting cylinder (3).

## Revendications

1. Dispositif hydraulique de basculement destiné à basculer les cabines de conducteurs de camions munies d'un frein parking dans une position de montage basculée et à partir de celle-ci dans une position de conduite rebasculée de la cabine, comprenant une pompe (6), un réservoir (5) pour le fluide hydraulique et un cylindre à double action (3) dont le piston (10) et ledit cylindre sont reliés respectivement à la cabine du conducteur ou au châssis, le dispositif comportant des conduites de fluide sous pression (1, 2) qui débouchent dans les chambres supérieure et inférieure (11, 12) du cylindre séparées par le piston et qui peuvent être raccordées si on le désire à la pompe ou au réservoir de fluide sous pression, les deux chambres du cylindre étant reliées l'une à l'autre par une conduite (13) dans la situation de point mort du piston qui correspond à la position rebasculée de la cabine du conducteur et une vanne d'arrêt (14) dont la commande dépend du frein parking étant située dans la conduite de liaison sur le cylindre, caractérisé par le fait que la vanne d'arrêt (14) est réalisée de manière à être manoeuvrée et/ou bloquée par un électroaimant (16) lequel, lorsqu'il est hors circuit, est toujours en position de passage sous l'effet d'un ressort (15) et lorsqu'il est en circuit est toujours en position de blocage, et par le fait que dans le circuit (18) de l'électroaimant (16) sont disposées au moins deux commandes (20, 2, 24) montées en série dont l'une (20) est fermée lorsque le frein parking est serré et dont l'autre (22) est fermée si au moins un organe de commande distinct (21, 23) a été actionné.

2. Dispositif selon la revendication 1, caractérisé par le fait que la vanne d'arrêt est réalisée sous la forme d'une vanne électromagnétique.

3. Dispositif selon la revendication 1, caractérisé par le fait que l'organe de commande distinct 21 est le levier de vitesse qui ne ferme la commande électrique (22) que s'il est dans la position de point mort.

4. Dispositif selon la revendication 1 ou 3, caractérisé par le fait que l'organe de commande distinct (23) est la clé de contact ou la serrure de contact qui ferme la commande électrique (24) lorsque le contact est mis.

5. Dispositif selon l'une des revendications 1 à 4, caractérisé par le fait que la vanne d'arrêt (14) et l'électroaimant (16) sont disposés directement sur le cylindre (3).